# EUROPEAN PATENT APPLICATION

(11) **EP 1 942 592 A2**
(43) Date of publication of application: **09.07.2008**
(21) Application number: 07024056.9
(22) Date of filing: 12.12.2007
(51) Int. Cl.: H04H 20/74

(54) **Satellite receiver having bluetooth or other short-range wireless interface**

(30) Priority: 04.01.2007 US 619762
(71) Applicant: GENERAL INSTRUMENT CORPORATION, Horsham, Pennsylvania 19044 (US)
(72) Inventor: Sorber, Russell E., Oak Park, Illinois 60304 (US); Meek, Jerry L., Wauconda, Illinois 60084 (US); Swim, Bradley R., Cary, Illinois 60013 (US)
(74) Representative: Openshaw, Paul Malcolm

(57) **Abstract**

A subscriber satellite broadcast receiver is provided. The receiver includes a tuner/demodulator for transforming satellite broadcast signals to a digital data stream, a decoder for decoding the digital data stream into a format suitable for display on a display device and a processor operatively coupled to the tuner/demodulator and the decoder. A short-range wireless transceiver is coupled to the processor for establishing a connection with a satellite broadcast service provider.

## Description

### Field of the Invention

The present invention relates generally to satellite communication systems, and more particularly to a method and system for providing communication between a subscriber and a satellite system service provider without the use of a landline telephony connection.

### Background of the Invention

Television programs arc distributed to viewers by a variety of broadcasting methods. These methods include traditional analog broadcast television (National Television Systems Committee or "NTSC" standard), digital broadcast television standards (Advanced Television Systems Committee or "ATSC" standard), cable television (both analog and digital), satellite broadcasting (both analog and digital), as well as other methods. These methods allow channels of television content to be multiplexed and transmitted over a common transmission medium.

Generally, in modern digital satellite communication systems a groundbased transmitter transmits a forward-error-coded uplink signal to a satellite positioned in geosynchronous orbit. The satellite in turn relays the signal back to a ground-based receiver antenna in a separate location. Direct broadcast satellite ("DBS") systems allow households to receive audio, data, and video directly from the DBS satellite. Each household subscribing to the system receives the broadcast signals through at receiver unit and a satellite dish receiver antenna. The antenna is typically mounted outside the house, and cables are provided to link the antenna to the indoor satellite receiver and associated equipment (e.g., video display).

To accommodate services such as instant pay-per-view and the like, as well as to perform ancillary services associated therewith such as billing, a telephony (e.g., a "POTS") connection is usually required between the subscriber's satellite receiver and the satellite service provider. The satellite receiver typically incorporates a standard RJ11 telephone interface for this purpose. This increases the cost and inconvenience of a satellite system on the subscribers's part because of the additional cost of providing a phoneline to receiver. To reduce this problem some satellite service providers suggest the use of an adaptor that offers telephony connectivity from the receiver to a pre-existing phone connection over electric power lines, which only requires access to an electric outlet. Of course, even this approach involves additional costs because the subscriber must purchase the adaptor and other related equipment to communicate over power lines. Moreover, this approach assumes the subscriber already has landline phone service. These requirements sometimes cause satellite subscribers to opt out of instant pay-per-view and other services.

### Summary of the Invention

In accordance with the present invention, a method and apparatus is provided for receiving a service from a satellite broadcast service provider. The method begins by establishing communication with a satellite broadcast service provider over a cellular network using a short-range wireless connection that operates over a personal area network. A service request is transmitted to the satellite broadcast service provider over the personal area network and the cellular network. In response, the requested service is received from a satellite associated with the satellite broadcast service provider.

In accordance with one aspect of the invention, the short-range wireless connection may be a Bluetooth connection.

In accordance with another aspect of the invention, the service request may be transmitted in a format that conforms to a short-range wireless protocol employed by the personal area network and communicated over the cellular network as an SMS, MMS or EMS message.

In accordance with another aspect of the invention, control instructions associated with the service request may be received over the cellular network and the personal area network.

In accordance with another aspect of the invention, the control instructions are communicated over the cellular network as an SMS message and received in a format that conforms to a short-range wireless protocol employed by the personal area network.

In accordance with another aspect of the invention, a subscriber satellite broadcast receiver is provided. The receiver includes a tuner/demodulator for transforming satellite broadcast signals to a digital data stream, a decoder for decoding the digital data stream into a format suitable for display on a display device and a processor operatively coupled to the tuner/demodulator and the decoder. A short-range wireless transceiver is coupled to the processor for establishing a connection with a satellite broadcast service provider.

### Brief Description of the Drawings

FIG. 1 is a schematic diagram of a conventional satellite video distribution system 100.

FIG. 2 is a schematic diagram of one example of a satellite video distribution system in which the connection between the control center and the subscriber receiver station is conducted over a cellular telephone network.

FIG. 3 is a schematic diagram of another example of a satellite video distribution system in which the connection between the control center and the subscriber receiver station is conducted over a cellular telephone network.

FIG. 4 is a block diagram of an illustrative subscriber satellite receiver.

FIG. 5 is a flowchart showing one example of a process performed by the satellite receiver when requesting a service from a satellite broadcast service provider.

FIG. 6 is a flowchart showing another example of a process performed by the satellite receiver when requesting a service from a satellite broadcast service provider in which SMS messages are employed.

### Detailed Description

Consumers in increasing numbers are equipped with cellular telephones. In fact, a significant and growing percentage of the population has only cellular phone service and does not subscribe to a landline service. For these individuals the need for a landline telephony connection to implement services over a satellite communication system is particularly problematic. To overcome this problem a method and apparatus is shown herein for establishing wireless connectivity between a subscriber's satellite receiver and a cellular telephone that is located in the vicinity of the satellite receiver. For example, the cellular telephone may be in the possession of the satellite subscriber and the both the satellite subscriber and the cellular telephone may be located, for instance, on the subscriber's premises.

As used herein, the term "cellular telephone" should be understood to refer to any mobile wireless telephone capable of communicating via a wireless communications system with remotely located parties, and includes both analog and digital cellular telephone systems. Examples of cellular telephone systems include Personal Communications Service ("PCS") systems, Global System for Mobile Communications ("GSM") systems, Code Division Multiple Access ("CDMA") systems. Time Division Multiple Access ("TDMA") systems, analog and/or digital Advanced Mobile Phone Service ("AMPS") systems, as well as other mobile radio telephone systems. Cellular telephone systems in the United States operate at or around 1900 MHz (e.g., GSM 1900 systems, Digital AMPS, and CDMA 1900 systems), in the 800-900 MHz range (e.g., analog AMPS), and so on.

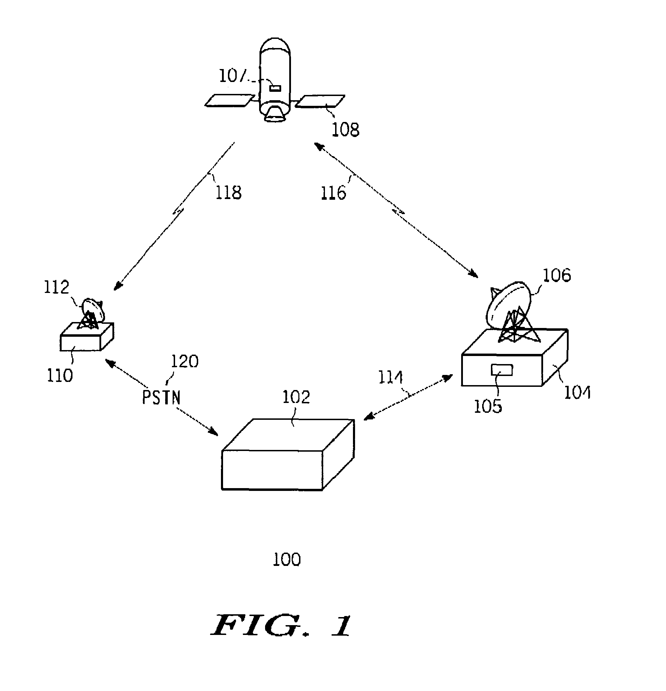

FIG. 1 is a schematic diagram of a conventional satellite video distribution system 100. The video distribution system 100 comprises a control center 102 in communication with an uplink center 104 via a ground or other link 114 and with a subscriber receiver station 110 via a public switched telephone network (PSTN) 120. In a conventional system the receiver station 110 includes a standard RJ11 telephone interface for this purpose. The control center 102 provides broadcast material (e.g. video programs, audio programs and data) to the uplink center 104 and coordinates with the subscriber receiver stations 110 to offer, for example, pay-per-view (PPV) program services, including billing and associated decryption of video programs.

The uplink center 104 receives program material and program control information from the control center 102, and using an uplink antenna 106 and transmitter 105, transmits the broadcast material and program control information to the satellite 108. The satellite receives and processes this information, and transmits the video programs and control information to the subscriber receiver station 110 via downlink 118 using transmitter 107. The subscriber receiving station 110 receives this information using an outdoor antenna unit 112.

Many cellular telephones are equipped with a short range wireless connection that is typically used to eliminate cables/wires/cords between devices (e.g., between cellular telephones and headsets) and provides services when devices are in close proximity to one another. One example of a short range wireless standard is Bluetooth. The area over which Bluetooth and other short-range wireless connections operate is often referred to as a personal area network or piconet. Bluetooth is a standard and a specification for small form-factor, low-cost, short range radio links between mobile PCs, cellular phones and other portable devices. Bluetooth operates in the unlicensed Industrial, Scientific & Medical (ISM) band at a nominal 2.4 GHz and achieves a range of about 10 meters using a 1 milliwatt transmitter. Data transfer speeds of about 720 Kbps are typical for Bluetooth wireless connections.

Bluetooth radio transmitters utilize a spread spectrum, frequency hopping, signal at up to 1600 hops per second. The signal hops among 79 frequencies at 1 MHz intervals to provide a high degree of interference immunity. Compared with other systems in the same frequency band, the Bluetooth radio hops faster and uses shorter packets. The frequency range in the United States is 2400 MHz to 2483.5 MHz. In some other countries, the frequency range is more restricted and only 23 1-MHz channels are available. In both systems a guard band is used at the lower and upper band edge. Ten different types of hopping sequences are defined--five for the 79-hop system and 5 for the 23-hop system. The individual hopping sequences include the page sequence and the page response sequence which are used in the page procedure. Bluetooth represents only one example of a suitable spread spectrum, frequency hopping communication technique that may be employed. Other short-range RF techniques that may be used to communicate over a personal area network include code division multiple access (CDMA), time division multiple access (TDMA), frequency-division multiplexing (FDM), spread-spectrum, global system for mobile communications (GSM), high-speed circuit-switched data (HCSD), general packet radio system (GPRS), enhanced data GSM environment (EDGE), and universal mobile telecommunications service (UMTS) and IEEE 802.11 and 802.16 protocols. Of course, these are only examples, and other technologies may be employed in wireless communication as well.

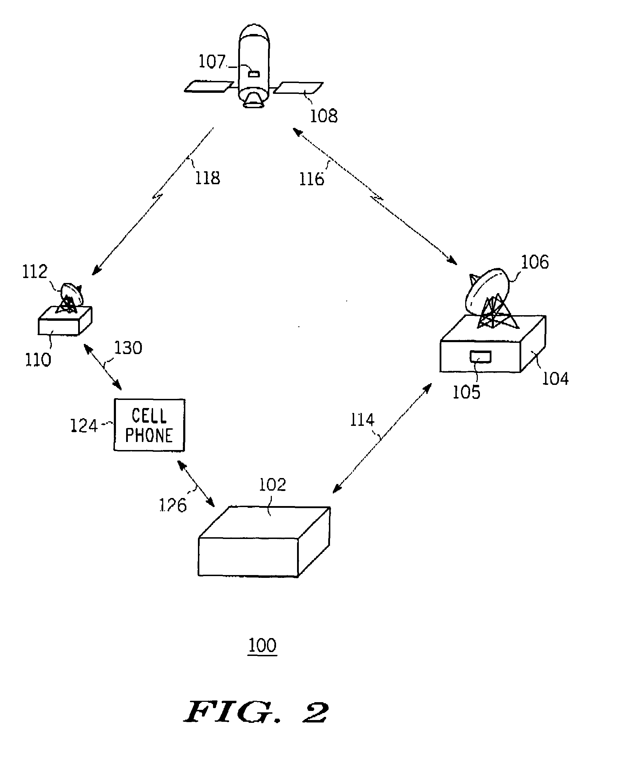

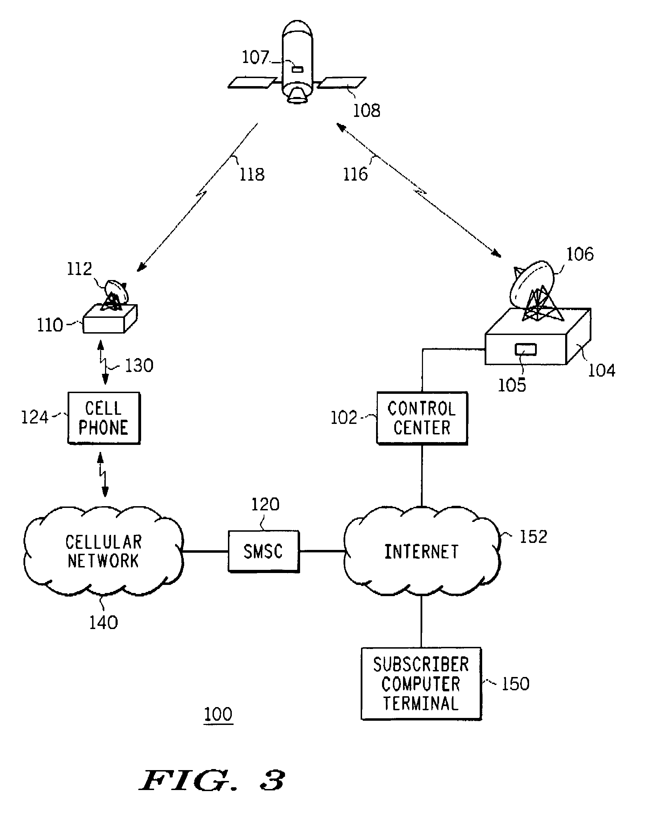

FIG. 2 shows a satellite system similar to that depicted in FIG. 1 except that in FIG. 2 the telephony connection between the control center 102 and the subscriber receiver station 110 is conducted over a cellular telephone network. In FIGs. 1 and 2, as well as the figures that follow, like elements are denoted by like reference numerals. The subscriber receiver station 110 in FIG. 3 communicates with the control center 102 using cellular telephone 124. Specifically, the receiver station 110 and cellular telephone 124 are both equipped with a short range wireless interface such as Bluetooth or the like so that they can communicate with one another over short-range link 130. The cellular telephone 124, in turn, communicates with the control center 102 over a cellular link 126.

Communication over cellular link 126 may be accomplished in a conventional manner using any appropriate protocols and standards. In some cases messages between the cellular telephone 124 and the cellular network may be sent as text messages (e.g., SMS messages), which arc then forwarded to the control center 102 in conformance with suitable protocol such as the Short Message Peer to Peer (SMPP) protocol, which will include the text message as the payload. The SMPP protocol is an efficient protocol for transmitting small amounts of data information among network elements and service providers. Once the service provider receives the message from the subscriber requesting a particular service, the service provider can immediately send a confirmation back to the subscriber's cellular telephone, which may include any appropriate billing details. The service provider may send the confirmation as an SMS message via the SMSC. Other protocols related to SMPP that may be alternatively employed include Enhanced Message Service (EMS) and Multimedia Message Service (MMS), for example. These protocols arc particularly suitable if additional information other than text is to be transmitted.

FIG. 3 shows a satellite system in which cellular communication between cellular telephone 124 and control center 102 is established using SMS messages. As shown, cellular telephone 124 is in communication with a cellular access network 140. In response to the message received from the satellite receiver 110 over short-range link 130, an SMS message is sent from the cellular telephone 124 to a network element associated with cellular network 140 such as a mobile switch center (MSC). The cellular network 140 forwards the message to SMSC 120. The SMSC 120 can then communicate the message to the control center 102 over the Internet using an appropriate protocol such as SMPP. The control center 102 can respond to the cellular telephone 124 over the reverse path. Alternatively, or in addition thereto, the control center 102 can send a confirmation to a subscriber terminal 150 over the Internet 152 using the subscriber's e-mail address. The control center 102 may also forward additional information such as control instructions or the like to the satellite receiver station 110 over the cellular network 140 using any cellular messaging technologies (e.g., SMS, EMS and MMS) and the short range link 130. Examples of such control information include instructions that turn on or off various features of the satellite receiver station 110. For example, the instructions may allow the control center 102 to lock or unlock select channels or control an associated DVR to record a program received by the receiver station 110. If the additional information is transmitted by the control center 102 as an SMS message, the cellular telephone 124, upon receipt of the SMS message, can convert the message into a format suitable for transmission over the personal area network so that it can be properly received by the receiver station 110. Any software that may be necessary to perform the conversion can be downloaded to the cellular telephone as a program file in the conventional manner.

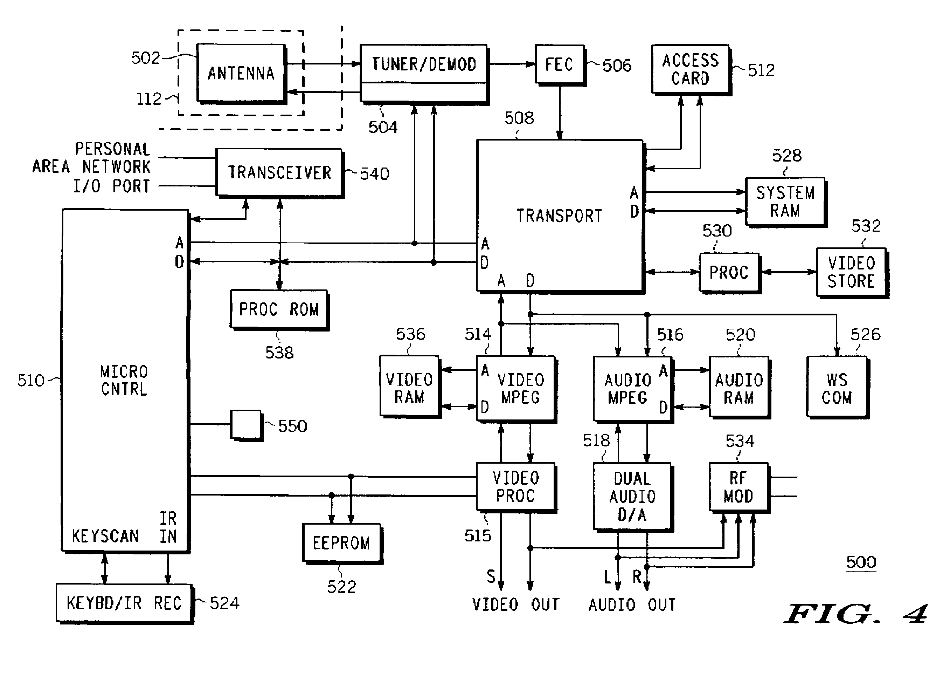

FIG. 4 is a block diagram of an illustrative subscriber satellite receiver 500 (e.g., receiver station 110 in FIG. 2). As detailed below, the satellite receiver 500 is equipped with a short range wireless connection such as a Bluetooth connection that allows communication to be established over a personal area network with a nearby cellular telephone. The cellular telephone is then used to establish a conventional telephony connection to the control center 102 via a cellular network. One particular example of a currently available satellite receiver in which a short-range connection may be employed is available from Motorola as model number DSR922.

The receiver 500 comprises a tuner/demodulator 504 communicatively coupled to an antenna 112. The tuner/demodulator 504 isolates a single, digitally modulated transponder signal, and converts the modulated data to a digital data stream. The digital data stream is then supplied to a forward error correction (FEC) decoder 506. This allows the receiver 500 to reassemble the data transmitted by the uplink center 104 (which applied the forward error correction to the desired signal before transmission to the subscriber receiving station 110) verifying that the correct data signal was received and correcting errors, if any.

The transport module 508 performs many of the data processing functions performed by the receiver 500. The transport module 508 processes data received from the FEC decoder module 506 and provides the processed data to the video MPEG decoder 514 and the audio MPEG decoder 516. The transport module 508 also provides a passage for communications between the microcontroller 510 and the video and audio MPEG decoders 514, 516. The transport module also works with a conditional access module (CAM) 512 to determine whether the subscriber receiving station 110 is permitted to access certain program material. Data from the transport module can also be supplied to external communication module 526.

Video data is processed by the MPEG video decoder 514. Using the video random access memory (RAM) 536, the MPEG video decoder 514 decodes the compressed video data and sends it to an encoder or video processor 515, which converts the digital video information received from the video MPEG module 514 into an output signal usable by a display or other output device. By way of example, processor 515 may comprise a National TV Standards Committee (NTSC) or Advanced Television Systems Committee (ATSC) encoder. In some cases both S-Video and ordinary video (NTSC or ATSC) signals are provided. Other outputs may also be utilized, and are advantageous if ATSC high definition programming is processed. Audio data is likewise decoded by the MPEG audio decoder 516. The decoded audio data may then be sent to a digital to analog (D/A) converter 518.

The microcontroller 510 receives and processes command signals from a remote control 524 or other input device such as a keyboard, for example. The microcontroller receives commands for performing its operations from a processor programming memory, which permanently stores such instructions for performing such commands. The processor programming memory may comprise a read only memory (ROM) 538, an electrically erasable programmable read only memory (EEPROM) 522 or, similar memory device. The microcontroller 510 also controls the other digital devices of the receiver 500 via address and data lines (denoted "A" and "D" respectively, in FIG. 2).

The receiver 500 may also include a local storage unit such as the video storage device 532 for storing video and/or audio data obtained from the transport module 508. Video storage device 532 can be a hard disk drive, a read/writable compact disc of DVD, a solid state RAM, or any other storage medium. In one example, the video storage device 532 is a hard disk drive with specialized parallel read/write capability so that data may be read from the video storage device 532 and written to the device 532 at the same time. To accomplish this, additional buffer memory accessible by the video storage 532 or its controller may be used. Optionally, a video storage processor 530 can be used to manage the storage and retrieval of the video data from the video storage device 532. The video storage processor 530 may also comprise memory for buffering data passing into and out of the video storage device 532. Alternatively or in combination with the foregoing, a plurality of video storage devices 532 can be used. Also alternatively or in combination with the foregoing, the microcontroller 510 can also perform the operations required to store and or retrieve video and other data in the video storage device 532.

The video processing module 515 output can be directly supplied as a video output to a viewing or display device such as a video or computer monitor. In addition the video and/or audio outputs can be supplied to an RF modulator 534 to produce an RF output and/or 8 vestigal side band (VSB) suitable as an input signal to a conventional television tuner. This allows the receiver 500 to operate with televisions without a video input.

Each of the satellites 108 comprises a transponder, which accepts program information from the uplink center 104, and relays this information to the subscriber receiving station 110. Known multiplexing techniques are used so that multiple channels can be provided to the user. These multiplexing techniques include, by way of example, various statistical or other time domain multiplexing techniques and polarization multiplexing.

A short-range wireless transceiver 540 operating over a personal area network connects to the customer's cellular telephone (e.g., cellular telephone 124 in FIG. 2) mobile phone, which is equipped with a similar wireless transceiver. As previously mentioned, the wireless transceiver 540 may he a Bluetooth transceiver. A Bluetooth-wireless transceiver 540 provides a transmitter and receiver that meets the Bluetooth-wireless specification for power, frequency, and air protocol, and handles all of the functions necessary to implement Bluetooth-wireless connectivity between the satellite receiver 500 and a Bluetooth-enabled cellular mobile handset. The short-range wireless transceiver 540 includes an antenna (not shown) optimized for Bluetooth-wireless-technology operation, and contains a Bluetooth-wireless-protocol stack, which implements the requirements of Bluetooth-wireless specifications.

The wireless transceiver 540, via the cellular telephone, contacts the service provider's control center and transmits the customer's purchase information for billing purposes, and/or other information. The transceiver 540 is controlled by the microprocessor 510. The wireless transceiver 540 can output data to other I/O port types including standard parallel and serial computer I/O ports.

The Bluetooth compliant transceiver 540 may be implemented with existing integrated circuit products, such as, for example, the Motorola MC71000 Bluetooth Baseband Controller, the Motorola MC13180 Bluetooth RF Transciever Integrated Circuit, the Motorola MRFIC2408 External Power Amplifier IC, and the Motorola MC13181 power management chip. A software suite that provides a Java API for controlling the operation of the Motorola Bluetooth IC Platform from a controller that operates a Java Virtual Machine is also available from Motorola, Inc.

Bluetooth profiles are published definitions of implementations of Bluetooth wireless technology for particular uses. Profiles arc the "services" offered by a device. In order for two Bluetooth-enabled devices to interoperate to complete a user task, both devices must implement a common profile. Illustrative Bluetooth profiles that in some cases may be employed by transceiver 540 include, for example, the Personal Area Network Profile (PAN), Generic Access Profile (GAP), Service Discovery Application Profile (SDAP), and the Wireless Application Protocol Bearer (WAPB).

Those of ordinary skill in the art will recognize that the functionality implemented in the receiver 500 depicted in FIG. 4 can be implemented by one or more hardware modules, one or more software modules defining instructions performed by a processor, or a combination of both.

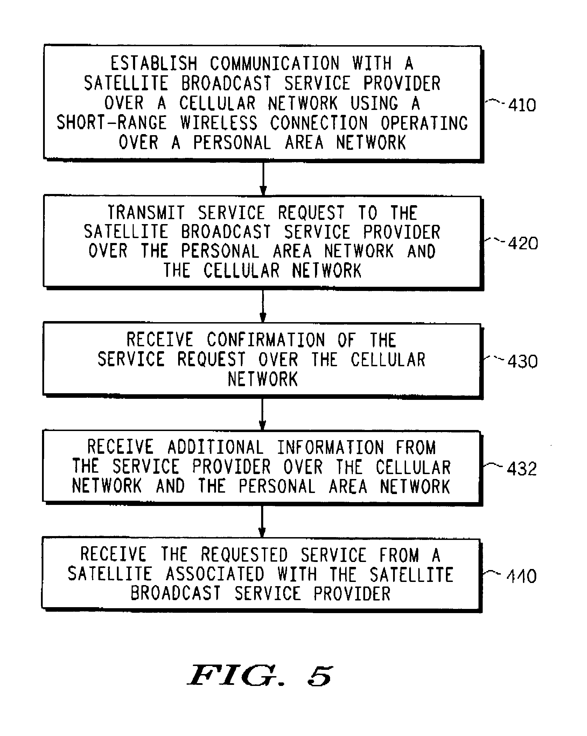

FIG. 5 is a flowchart showing one example of a process performed by the satellite receiver 500 when requesting a service from a satellite broadcast service provider. The method begins in step 410 by establishing communication with a satellite broadcast service provider over a cellular network using a short-range wireless connection that operates over a personal area network. The connection may be established with a cellular telephone equipped with a short-range wireless interface. Next, in step 420 a service request is transmitted to the satellite broadcast service provider over the personal area network and the cellular network. In step 430 the cellular telephone receives confirmation of the service request over the cellular network. In step 432, additional information such as control information is received from the service provider over the cellular network and the personal area network. In this case the cellular telephone receives the additional information from the service provider and, if necessary, converts it into a suitable format for transmission over the personal area network. Finally, the requested service is received from a satellite associated with the satellite broadcast service provider in step 440.

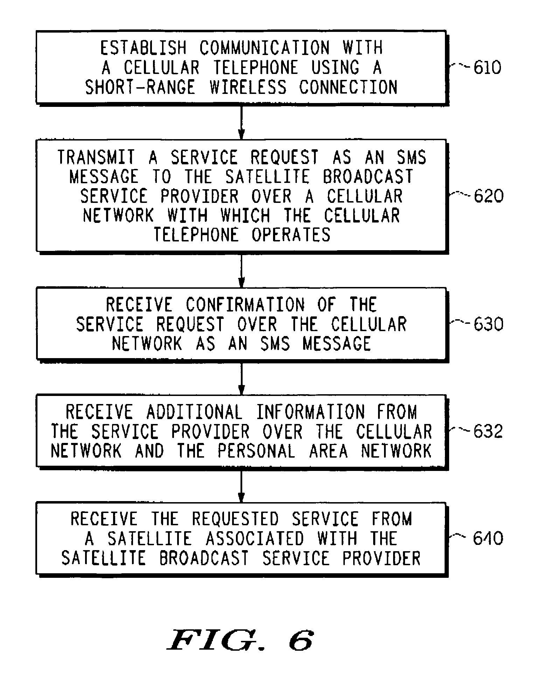

FIG. 6 is a flowchart showing one example of a process similar to that depicted in FIG. 5 except that in FIG. 6 SMS, EMS or MMS messages are employed. The process begins in step 610 by establishing communication with a cellular telephone using a short-range wireless connection. In step 620, the satellite receiver transmits a service request as an SMS, EMS or M M S message to the satellite broadcast service provider over a cellular network with which the cellular telephone operates. The cellular telephone, in step 630, receives confirmation of the service request over the cellular network as an SMS, EMS or MMS message. In step 632, additional information such as control information is received from the service provider over the cellular network and the personal area network. The additional information is first converted by the cellular telephone into a format suitable for reception by the satellite receiver over the personal area network. The requested service is provided to the satellite receiver in step 640 from a satellite associated with the satellite broadcast service provider.

Although a specific architecture has bccn described in connection with FIGs. 1-4 herein, including specific functional elements and relationships, it is contemplated that the systems and methods herein may be implemented in a variety of ways. For example, functional elements may be packaged together or individually, or may be implemented by fewer, more or different devices, and may be either integrated within other products, or adapted to work with other products externally. When one element is indicated as being responsive to another element, the elements may be directly or indirectly coupled.

The process described above, including those shown in FIGs. 5 and 6, may be implemented in a general, multi-purpose or single purpose processor. Such a processor will execute instructions, either at the assembly, compiled or machine-level, to perform that process. Those instructions can be written by one of ordinary skill in the art following the descriptions herein and stored or transmitted on a computer readable medium. The instructions may also he created using source code or any other known computer-aided design tool. A computer readable medium may be any medium capable of carrying those instructions and includes a CD-ROM, DVD, magnetic or other optical disc, tape, silicon memory (e.g., removable, non-removable, volatile or non-volatile), packetized or non-packetized wireline or wireless transmission signals.

It will furthermore be apparent that other and further forms of the invention, and

embodiments other than the specific embodiments described above, may be devised without departing from the spirit and scope of the appended claims and their equivalents, and it is therefore intended that the scope of this invention will only be governed hy the following claims and their equivalents.

## Claims

1. At least one computer-readable medium encoded with instructions which, when executed by a processor, performs a method including:
establishing communication with a satellite broadcast service provider over a cellular network using a short-range wireless connection that operates over a personal area network;
transmitting a service request to the satellite broadcast service provider over the personal area network and the cellular network; and
receiving the requested service from a satellite associated with the satellite broadcast service provider.

2. The computer-readable medium of claim 1 wherein the short-range wireless connection is a Bluctooth connection.

3. The computer-readable medium of claim 1 wherein the service request is transmitted in a format that conforms to a short-range wireless protocol employed by the personal area network and communicated over the cellular network as an SMS, MMS or EMS message.

4. The computer-readable medium of claim 1 further comprising receiving control instructions associated with the service request over the cellular network and the personal area network.

5. The computer-readable medium of claim 4 wherein the control instructions arc communicated over the cellular network as an SMS message and received in a format that conforms to a short-range wireless protocol employed by the personal area network.

6. A subscriber satellite broadcast receiver, comprising:
a tuner/demodulator for transforming satellite broadcast signals to a digital data stream;
a decoder for decoding the digital data stream into a format suitable for display on a display device;
a processor operatively coupled to the tuner/demodulator and the decoder; and
a short-range wireless transceiver coupled to the processor for establishing a connection with a satellite broadcast service provider.

7. The receiver of claim 6 wherein the short-range wireless transceiver is a Bluetooth transceiver.

8. The receiver of claim 6 wherein the short-range wireless transceiver is configured to he operable with an RF technique selected from the group consisting of code division multiple access (CDMA), time division multiple access (TDMA), frequency-division multiplexing (FDM), spread-spectrum, global system for mobile communications (GSM), high-speed circuit-switched data (HCSD), general packet radio system (GPRS), enhanced data GSM environment (EDGE), universal mobile telecommunications service (UMTS), IEEE 802.11 protocol and IEEE 802.16 protocol.

9. The receiver of claim 6 wherein the processor is responsive to control instructions received by the transceiver from the satellite service provider.

10. At least one computer-readable medium encoded with instructions which, when executed by a processor, performs a method including:
receiving from a satellite subscriber a service request that traverses a personal area network and a cellular network;
in response to the request, transmitting confirmation of the service request to the subscriber over the cellular network; and
causing the requested service to be transmitted to the satellite subscriber from a satellite.

11. The computer-readable medium of claim 10 further comprising transmitting a confirmation of the service request to the satellite subscriber over the cellular network and the personal area network.

12. The computer-readable medium of claim 11 further comprising transmitting a confirmation of the service request from the satellite subscriber over the Internet.

13. The computer-readable medium of claim 10 wherein the personal area network is a Bluetooth network.

14. The computer-readable medium of claim 10 wherein the service request is received in a format that conforms to a short-range wireless protocol employed by the personal area network and communicated over the cellular network as an SMS, MMS or EMS message.

15. The computer-readable medium of claim 11 wherein the confirmation of the service request is transmitted as an SMS, EMS or MMS message.

16. The computer-readable medium of claim 10 further comprising transmitting control instructions associated with the service request over the cellular network and the personal area network.

17. The computer-readable medium or claim 15 wherein the control instructions arc transmitted as an SMS message.
